# DEMANDE DE BREVET EUROPEEN

(11) **EP 1 309 124 A1**
(43) Date de publication de la demande: **07.05.2003**
(21) Numéro de dépôt: 02292639.8
(22) Date de dépôt: 24.10.2002
(51) Int. Cl.: H04L 12/24

(54) **Passerelle CIM pour la supervision et le contrôle de réseaux de télécommunication**

(30) Priorité: 31.10.2001 FR 0114170
(71) Demandeur: ALCATEL, 75008 Paris (FR)
(72) Inventeur: Toure, Famory, 91300 Massy (FR); Robinson, Julien, 75014 Paris (FR)
(74) Mandataire: Chaffraix, Sylvain

(57) **Abrégé**

Procédé de supervision et de contrôle au moyen d'un client de supervision, d'un réseau de transport associé à au moins un serveur de données basé sur un protocole de type CIM, caractérisé en ce qu'il consiste à connecter le client de supervision à au moins une passerelle comportant des moyens pour assurer la liaison entre le serveur et le client de supervision en utilisant une description des données de ce serveur à partir d'une base d'information de gestion. Ledit client peut être basé sur un protocole de type OPC (object linking and embedding for process control).

## Description

L'invention concerne un système de supervision et de contrôle d'un réseau de transport de télécommunication.

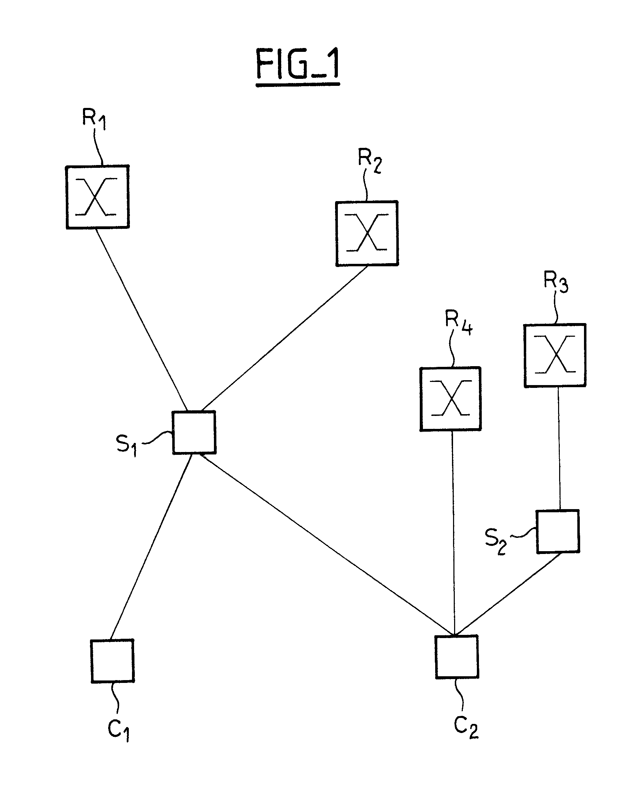

La figure 1 représente un système de supervision et de contrôle, selon l'état de la technique, ainsi qu'une partie du réseau de transport contrôlé.
Ce réseau de transport comporte un ensemble d'éléments de réseau R1, R2, R3, R4 qui peuvent être des commutateurs, des liaisons etc.
Il est associé à un ou plusieurs serveurs de données, S1, S2. La communication entre les éléments du réseau de transport et les serveurs de données se fait généralement selon un protocole de communication CIM (acronyme anglais de Common Information Model) ou SNMP (Simple Network Management Protocol).

Les serveurs de données S1, S2 sont par ailleurs reliés à un ou plusieurs clients de supervision C1, C2 qui permettent notamment de visualiser les données sous une forme graphique, de les enregistrer, de les traiter etc.
La communication entre ces clients de supervision C1, C2 et les serveurs de données est habituellement conforme à un protocole spécifique au logiciel mis en oeuvre sur les clients de supervision.
Il est à noter que, selon certaines solutions de l'état de la technique, le client de supervision C2 peut être directement relié aux éléments de réseau R4 à superviser.

Il existe de nombreuses solutions pour superviser des éléments d'un réseau de télécommunication conformes au protocole CIM. Notamment, on peut citer la demande de brevet européen EP 1061445 déposée par la société Sun Microsystems. Toutefois, la solution consiste à utiliser une application de supervision « CIM Workshop », elle-même compatible avec le protocole CIM. Une telle approche souffre par conséquent d'ouverture puisque ne permettant pas de découpler le protocole de gestion de réseau utilisé par les éléments du réseau de télécommunication, des applications de supervision.
La demande de brevet européen EP1103881 divulgue une passerelle permettant l'interfaçage entre des éléments d'un réseau de télécommunication, supportant le protocole CIM, avec des applications de supervision de réseau supportant le protocole CMIP (*Common Management Information Protocol*). Toutefois, l'expérience montre que ces applications de supervision de réseau sont des systèmes complexes, difficiles à mettre en oeuvre notamment sur un système de traitement de l'information (un ordinateur) de taille modeste. De surcroît, ces systèmes demandent un long apprentissage pour parvenir à leur maîtrise et n'offrent pas toujours de fonctions d'animation de données évoluées.

Il existe par ailleurs, dans un domaine autre que celui de la supervision et de contrôle de réseaux de télécommunication, des outils de supervision d'usines ou de processus automatisés. Ces outils sont généralement basés sur la norme OPC (pour *Object linking and embedding for Process Control*, en anglais). Cette norme de communication est habituellement utilisée sur le système Windows™ de la société Microsoft.
Ces outils « sur étagère » ou ayant nécessité peu de développement, sont généralement dotés de multiples fonctions d'animation des données (zoom, panoramique, présentation du réseau en plusieurs couches etc.). Ils présentent un bon niveau d'ergonomie mais ne sont pas adaptés à la supervision d'un réseau de transport tel que décrit par la figure 1. Notamment, ils ne permettent pas la supervision ni le contrôle d'éléments de réseau, selon le protocole CIM.

Un exemple d'un tel outil est par exemple le logiciel « Graph WorX32 » de la société Iconics, qui permet notamment de surveiller des capteurs de température, d'entrée-sortie, des potentiomètres, des indicateurs de tension, etc.

Le but de la présente invention est donc de pouvoir utiliser de tels outils de supervision basés sur le protocole normalisé OPC, pour la supervision d'un réseau de transport, notamment de télécommunication, comportant un grand nombre d'éléments de réseau utilisant la norme CIM.

Pour ce faire, l'invention a pour objet est un procédé de supervision et de contrôle, au moyen d'un client de supervision, d'un réseau de transport de télécommunication associé à au moins un serveur de données basé sur un protocole de type CIM. Le procédé de l'invention se caractérise en ce qu'il consiste à connecter le client de supervision à au moins une passerelle comportant des moyens pour assurer la liaison entre le serveur et le client de supervision en utilisant une description des données du serveur à partir d'une base d'information de gestion.
Le client de supervision peut être basé sur un protocole de type OPC (*Object linking and embedding for Process* Control).
Selon une mise en oeuvre préférentielle de l'invention, la description peut être réalisée selon le langage XML.

L'invention a aussi pour objet un serveur de données basé sur un protocole de type CIM, caractérisé en ce qu'il comporte au moins une passerelle apte à assurer une liaison avec un client de supervision basé sur un protocole de type OPC, en utilisant une description des données du serveur de données à partir d'une base d'information de gestion. Cette description peut être réalisée selon le langage XML.

L'invention et ses avantages apparaîtront de façon plus claire dans la description qui va suivre en regard des figures annexées.
La figure 1, déjà décrite, représente schématiquement un système de supervision de réseau de transport existant.
La figure 2, schématise un système de supervision et de contrôle d'un réseau de transport selon l'invention.

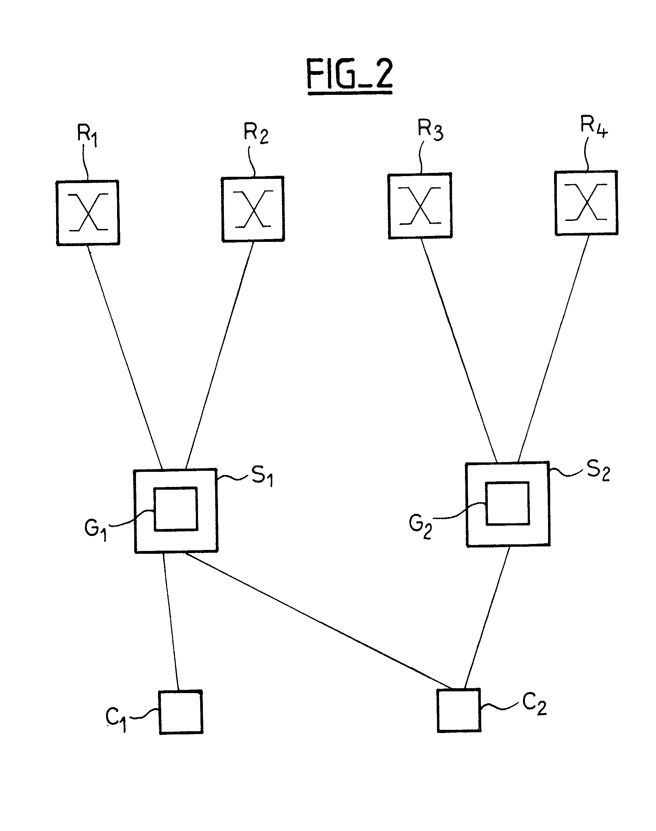

Un système de supervision et de contrôle de réseau de transport de télécommunication est représenté par la figure 2. On considérera plus particulièrement l'application à un réseau de télécommunication.

Les éléments de réseau à superviser R1, R2, R3, R4 peut être un routeur, un commutateur etc. Ils envoient leurs données à des serveurs de données S1, S2.
Ces serveurs de données communiquent avec des clients de supervision C1, C2, de type OPC. Ces communications sont assurées par une ou plusieurs passerelles G1, G2. Ces passerelles peuvent être intégrées aux serveurs de données S1, S2.
Les passerelles G1, G2 sont des programmes définissant un protocole de communication entre un serveur de données CIM et un client de supervision OPC, permettant de visualiser les données à superviser, de préférence sous forme arborescente, et des les animer. Les données fournies par les serveurs de données S1, S2 sont les objets à superviser et leurs propriétés. On entend par objet, les éléments de réseau appartenant au réseau de transport considéré.

On définit une première étape de description des données. Cette description est réalisée en parcourant et en choisissant les données à superviser parmi les données d'une base d'information de gestion (MIB pour *Management Information Base*) et en utilisant pour les définir, la syntaxe d'un langage orienté objet tel que le langage XML (pour *eXtended Markup Language*).
La description d'un élément (ou classe) de la base d'information de gestion, en XML, est de la forme :

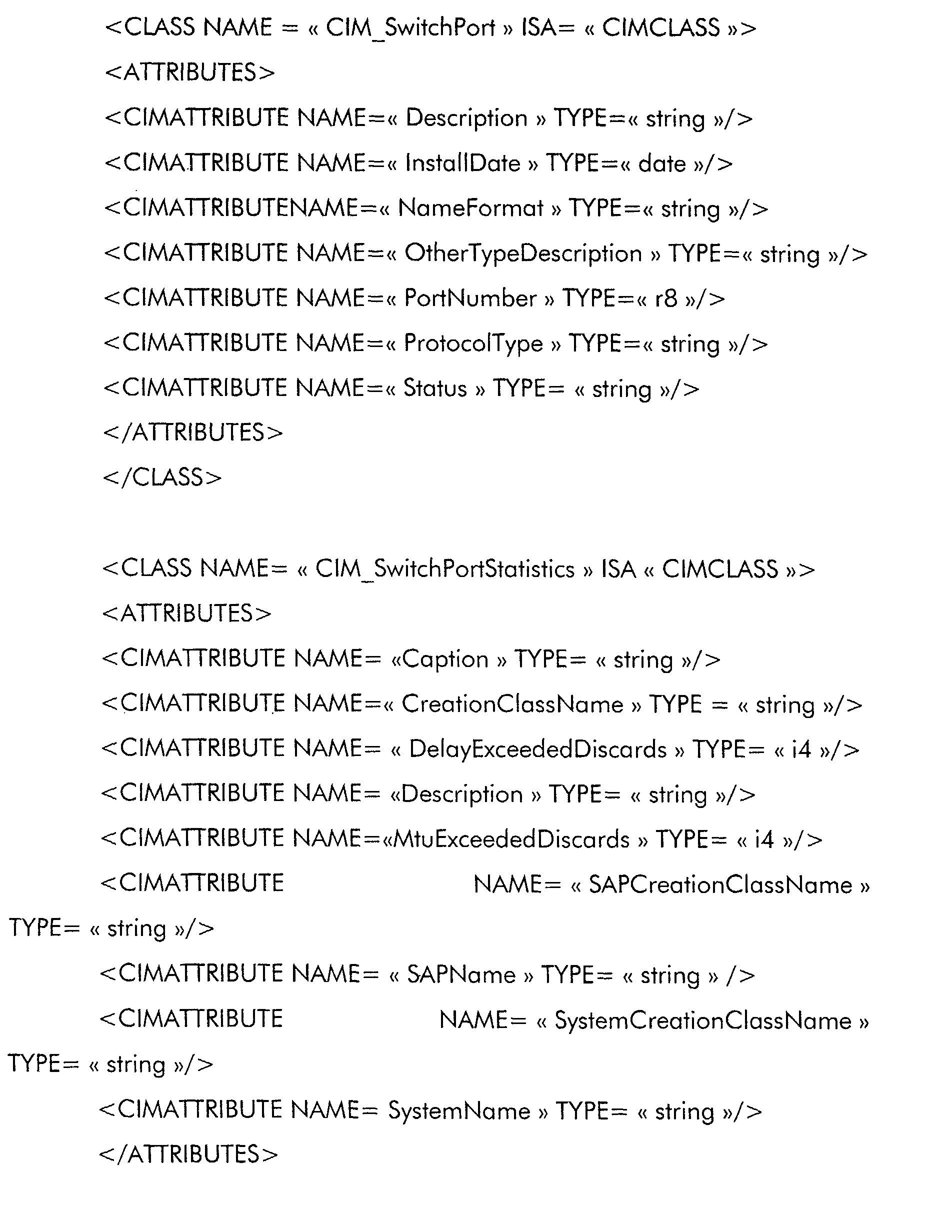

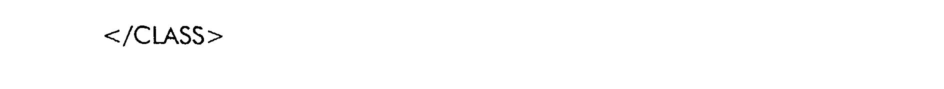

La description d'une instance de cette classe, en l'occurrence d'un élément de réseau à superviser, est alors par exemple :
<CIM_SwitchPort name= « routeur 1 »
Namespace= »\195.9.12.245\roo\CIMV2 »/>

Conformément à un protocole de communication entre applications du type COM/DCOM (acronyme anglais de *Component Object Model* /*Distributed Component Object Model*) qui permet notamment de définir des composants qui peuvent être réintégrés dans d'autres applications, les objets à superviser, une fois décrits en utilisant un schéma de type XML, sont dynamiquement créés.
On pourra par exemple utiliser une interface d'invocation dynamique telle que celle qui existe notamment en Java, Corba, Visual Basic... En effet, ces interfaces permettent en cours d'exécution du programme, à une instance d'une classe, de récupérer les attributs d'une classe soeur ou d'appeler une méthode d'une classe soeur.
Dans la réalisation pratique qui a été mise en oeuvre, on a créé un objet générique qui permet de décrire aussi bien des classes que les instances de ces classes et qui redéfinit les interfaces d'invocation dynamique.
Cet objet générique présente l'avantage de permettre de n'utiliser qu'un seul objet pour décrire les objets supervisés. Cela permet aussi d'accéder aux objets sous une application bureautique ou un langage de script tel que par exemple, Excel, Word, Access, Visual Basic ou Wsh (Windows Shell), en utilisant la syntaxe suivante :
SocieteRouteur2.Description= « ceci est le premier routeur de la société »
Le procédé de l'invention peut être utiliser tant pour la supervision d'un réseau de transport que pour le contrôle (c'est-à-dire, le « provisionnement » ou « *provisionning* », en langue anglaise). Ainsi, la description des données peut être utilisée pour configurer directement les éléments du réseau de télécommunication supervisé.

Un autre avantage de l'invention est qu'en utilisation une description des données, c'est-à-dire un fichier séparé de la passerelle elle-même, qui est interprété directement, on a une bonne séparation du traitement et des données. L'évolution du réseau de télécommunication supervisé n'a pas d'impact sur le système de supervision, et la configuration de ce système est extrêmement simple.
Par ailleurs, ce fichier de description des données peut reprendre les schémas CIM, ajoutant ainsi une transparence et une facilité d'écriture et de lecture du fichier par un être humain.

## Revendications

1. Procédé de supervision et de contrôle au moyen d'un client de supervision (C1, C2), d'un réseau de transport de télécommunication associé à au moins un serveur de données (S1, S2) basé sur un protocole de type CIM, **caractérisé en ce qu'**il consiste à connecter ledit client de supervision à au moins une passerelle (P) comportant des moyens pour assurer la liaison entre ledit serveur et ledit client de supervision en utilisant une description des données dudit serveur à partir d'une base d'information de gestion, ledit client de supervision étant basé sur un protocole de type OPC.

2. Procédé selon la revendication précédente, dans lequel ladite description est réalisée selon le langage XML.

3. Serveur de données, basé sur un protocole de type CIM, **caractérisé en ce qu'**il comporte au moins une passerelle apte à assurer une liaison avec un client de supervision basé sur un protocole de type OPC, en utilisant une description des données dudit serveur de données à partir d'une base d'information de gestion.

4. Serveur de données selon la revendication précédente, dans lequel ladite description est réalisée selon le langage XML.
